# EUROPEAN PATENT APPLICATION

(11) **EP 3 355 587 A1**
(43) Date of publication of application: **01.08.2018**
(21) Application number: 17153840.8
(22) Date of filing: 30.01.2017
(51) Int. Cl.: H04N 21/2343, H04N 5/232, H04N 5/783, H04N 21/2187

(54) **VIDEO PRODUCTION APPARATUS AND METHOD FOR VIDEO PRODUCTION**

(71) Applicant: EVS Broadcast Equipment SA, 4102 Seraing (BE)
(72) Inventor: Barnich, Olivier, 4000 Liège (BE); Bastings, Michael, 4420 Saint Nicolas (BE); Vounckx, Johan, 3210 Linden (BE)
(74) Representative: Rossmanith, Manfred

(57) **Abstract**

A video processing apparatus is suggested which receives a plurality of video input streams such as camera feeds. Among the input streams there is at least one 360° camera feed. The video processing apparatus receives data allowing determining a virtual camera view from the 360° camera feed. The Video processing apparatus comprises a storage in which camera feeds are recorded for later replay. In addition to that, a method for processing video streams is suggested for extracting a virtual camera feed from 360° camera feed. The videos streams and camera feeds are processed to generate replay streams for broadcast and training purposes of sports teams.

## Description

### Field

The present disclosure relates to a video production apparatus and a method for video production. According to an embodiment of the present disclosure the video production apparatus is a replay device. In an alternative embodiment the video production apparatus is a mixing device (mixer).

### Background

Many people are interested in following games and sporting events such as football games in Europe. The majority of people who are interested in such an event will follow the event on a TV. Therefore, most of the big games and sporting events are televised or recorded with cameras for later viewing. For covering the event a plurality of cameras are placed in a stadium where the event takes place enabling a production director to dynamically choose a camera view which supposedly gives the viewer the most interesting view on the event. Accordingly, the production director selects cameras, switches between cameras and gives instructions to the cameramen in the stadium with regard to camera zoom and angle. The director communicates with the camera operators in the stadium and his team in the production room and then decides which camera feed and type of shot will be selected for the broadcast. It goes without saying that since the decision of choosing the camera view for broadcast lays in the hands of the production director and his or her assistants important moments of a play may be missed because the action in a game or sporting event occurs so quickly that it is difficult or in some cases impossible given the limits of human reaction speed for human observation and decision making to keep up with optimal selection of cameras and camera setting. In order to deal with this difficulty the production director will choose wide camera angles to cope with the unpredictable nature of the game to ensure that a reasonably good live feed is available for broadcast. In this way the production director avoids the problem of missing an important action in the game but at the expense of a lack in detail and interest.

In this context high resolution 360° cameras or omni-directional cameras in combination with replay systems provide efficient support for helping the production director performing his task. Such replay systems are commercially available, e.g. the products "Xeebra" and the XT and XS servers manufactured by EVS Broadcast Equipment S.A.

The Xeebra broadcast replay device is capable of ingesting, recording and displaying feeds from a plurality of cameras at once. The replay device makes all camera feeds available for a production director to be replayed. In case in the broadcasted feed an important action has been missed, the production director can revert back to the recorded camera feeds and select among the recorded camera feeds the one, which is most suitable for playing back the missed action at a speed desired by a user, for instance in slow-motion.

Replay systems are also for coaches who can implement the technology as a learning tool either during games or using cameras installed in practice facilities. In many scenarios, a play can be reviewed to show specific players, particular positions or how an entire team can improve performance.

Taking this as a starting point the present disclosure suggests a video processing apparatus providing even further flexibility and versatility for video productions.

### Summary

Sports has always been a proving ground for innovation. And the use of sports broadcasting technology in other areas of the industry is not new. Statistics initially developed for on-screen analysts are now widely distributed so fans can learn more and fantasy owners can make better decisions. Broadcast graphics are now used by clubs and teams for training and analysis. Video streams that were once only delivered by television are available on any device, wherever fans are.

With the right technology in place, replays can become invaluable to sports organizations.

In addition to replay systems being an incredibly useful tool for officials and coaches, their functionality can also be beneficial to team doctors and medical experts on the side-lines. With increasing attention on player welfare across many sports action needs to be reviewed quickly to diagnose, or even prevent injuries. It can also be useful in diagnosing ankle, knee and other joint injuries.

Having the ability to utilise broadcast-quality camera feeds and pause, rewind, zoom in and replay incidents frame-by-frame means medical personnel can isolate and review injury-causing actions up-close and with the utmost precision. Viewing video feeds from multiple angles brings the ability for medical staff to analyse actions and pinpoint causes of injury.

All these functionalities are also useful to enhance the viewer experience of a viewer following a sports event on a TV at home or in a public place.

According to a first aspect the present disclosure suggests a video processing apparatus comprising
an input module for receiving a plurality of video input streams, wherein at least one video input stream is a camera feed of a 360° camera,
a control panel for receiving commands with regard to P/T/Z data of a virtual camera;
a processor for processing the video input streams to generate one or several video output streams; wherein the control interface communicates the P/T/Z data to the processor which processes the at least one 360° camera feed to generate a virtual camera feed as defined by the P/T/Z data, wherein the virtual camera feed is one of the one or several of video output streams; and
an output module for outputting the one or several video output streams.

The suggested video processing apparatus enables a user to extract from a 360° camera feed a camera view corresponding to a virtual camera view at his or her discretion.

Advantageously the video processing apparatus may comprise a compression stage and a storage device for recording the plurality of video input streams, wherein the storage device records all images of the video input stream for later replay.

According to an embodiment the video processing apparatus may further comprise a replay controller for controlling a replay stream, wherein the replay controller is composed of a cache controller, a cache memory, the play-out controller and the output processor. The replay controller may be adapted for providing image interpolation capabilities between images succeeding each other in time or spatial dimensions.

In a further embodiment the control panel is adapted for receiving further commands and for communicating the further commands to the replay controller, wherein the further commands include start and stop time of a recorded video stream to be replayed and an associated replay speed. In this case the control panel can comprise a jog dial enabling browsing forward and backward in any recorded video stream.

In an advantageous embodiment of the video processing the control panel is provided with a joystick allowing an operator to input P/T/Z data for the virtual camera.

It has been found useful when the output of the video processing apparatus is communicatively connected with the storage device for enabling recording of the video output streams. In this way it is possible to store not only camera feeds but also replay feeds for later use in a broadcast production or for demonstration purposes in a training situation.

In an advantageous embodiment the processor of the suggested video processing apparatus can comprise a graphical processing unit for performing mixing effects on the video input streams. This embodiment enables a program director to implement video mixing effects while taking benefit from the flexibility of choosing the view of a virtual camera.

According to a second aspect the present disclosure suggests a method for processing video streams comprising:
- receiving a plurality of video input streams, wherein at least one of the plurality of video input streams is a camera feed of a 360° camera;
- receiving commands with regard to P/T/Z data of a virtual camera;
- communicating the P/T/Z data of the virtual camera to a processor;
- processing the at least one camera feed of a 360° camera to generate a virtual camera feed as defined by the P/T/Z data;
- processing video input streams and the virtual camera feed to generate one or several video output streams; and
- outputting the one or several video output streams.

The suggested method may comprise recording at least one of the plurality of video input streams for later replay as a replay stream. In this case a start time, and end time and a replay speed may be stored jointly with the images of the replay stream.

In some embodiments the P/T/Z data are not just a fixed single triplet per replay but rather the P/T/Z data are dynamically defined during the replay. For example, the P/T/Z data are continuously controlled by an operator. In another example the operator only defines a set of multiple P/T/Z data. In this case in yet another embodiment an algorithm performs an interpolation between the set of multiple P/T/Z data to generate continuously changing P/T/Z data.

It has been found useful to also store the P/T/Z data of the virtual camera associated with the replay stream.

In an embodiment of the method suggested by the present disclosure a temporal interpolation between images of the replay stream is performed if the replay speed corresponds to a slow-motion play-back.

In a further embodiment the suggested method performs spatial interpolation between images of the replay stream if multiple virtual camera views are associated with the replay stream.

According to a third aspect the present disclosure suggests software containing program code, which, when loaded into a processor and executed by the processor performs a method according to the second aspect of the present disclosure.

### Brief Description of Drawings

Exemplary embodiments of the present disclosure are illustrated in the drawings and are explained in more detail in the following description. In the figures the same or similar elements are referenced with the same or similar reference signs. It shows:
Fig. 1A schematically a football field in a stadium in which 360° cameras are located;
Fig. 1 B an illustration to visualize the concept of a virtual camera;
Figs. 2A-2Cschematic diagrams of exemplary setups of production equipment in a stadium;
Fig. 3 a schematic block diagram of a replay device showing its main components and signal flows;
Fig. 4A-4C: graphic illustrations of examples visualizing replay streams;
Fig. 5 a schematic block diagram of a mixing device showing its main components and signal flows; and
Fig. 6 a schematic flow diagram of a method for processing video streams according to the present disclosure.

### Description of Embodiments

Reference herein to "one embodiment" or "an embodiment" means that a particular feature, structure, or characteristic described in connection with the embodiment can be included in at least one implementation of the disclosure. The appearances of the phrase "in one embodiment" in various places in the specification are not necessarily all referring to the same embodiment, nor are separate or alternative embodiments necessarily mutually exclusive of other embodiments.

While the disclosure may be susceptible to various modifications and alternative forms, specific embodiments have been shown by way of example in the drawings and will be described in detail herein. However, it should be understood that the disclosure is not intended to be limited to the particular forms disclosed.

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The embodiments described below comprise separate devices to facilitate the understanding of different functional group of the present disclosure. However, it is to be understood that some devices may very well integrated in a single device.

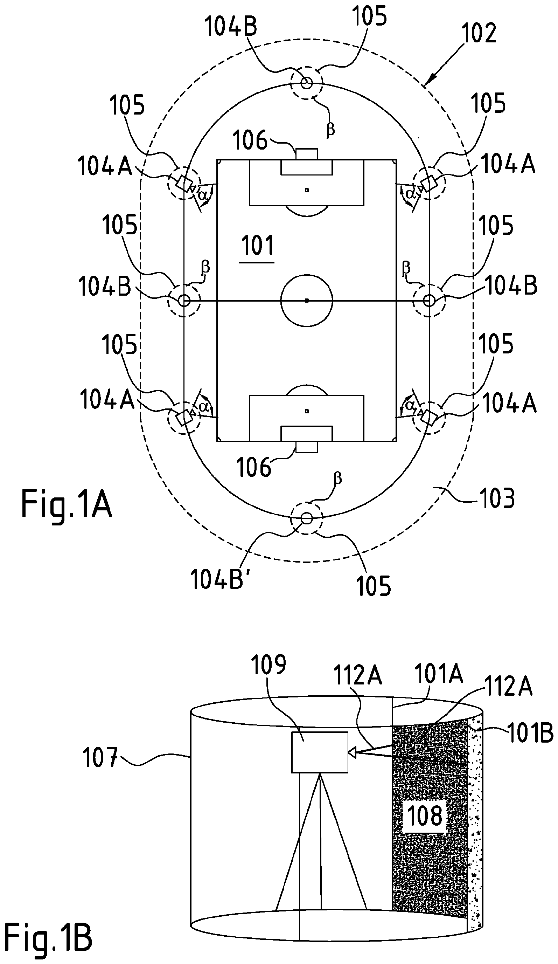

Fig. 1A exhibits football (soccer) field 101 in a stadium 102. The football field 101 is surrounded by the ranks 103 for the spectators. Between the football field 101 and the ranks 103 a plurality of cameras 104A, 104B are located to capture the action on the field 101. Fig. 1A shows eight cameras. However, the present disclosure is not limited to a specific number of cameras, i.e. it is equally applicable in stadiums being equipped with more or fewer cameras. The cameras may be fixedly installed or maybe installed only when a specific event is to be covered. In the example shown in Fig. 1A, the cameras 104A are regular broadcast cameras having a viewing angle α while the cameras 104B are 360° cameras or omni-directional cameras having a viewing angle β= 360° which is symbolized by a dashed circle 105 around the location of each camera 104B. For instance the camera 104B' on the bottom side in Fig. 1A captures a view from behind a goal 106 of the soccer field 101 and at the same time it captures a view of the ranks 103 laying behind the goal 106. Technically speaking each 360° camera 104B captures a panoramic view such that each video frame contains video information for every pixel and its location in the panoramic view.

The camera feeds of all cameras 104A, 104B are transferred to a studio room in the stadium 102 or in a broadcast truck (both not shown in Fig. 1A) for processing which will be described in greater detail further below. The images or frames of the camera feeds are time stamped and are ingested in a synchronous manner, i.e. images from different cameras having the same time stamp correspond to the same moment in a game but the images show different perspectives because they are shot from different viewing angles and/or zoom position of camera lenses. The viewing angle of a camera is defined by a pan and tilt position of the camera. Pan, tilt and zoom position of a camera is abbreviated as P/T/Z data.

A camera feed from a 360° camera provides exhaustive information for a 360° panoramic view and enables the extraction of a specific camera view representing only a portion of the full panoramic view. The extracted view represents the view of a so-called virtual camera. The extraction of the virtual camera view is illustrated in Fig. 1 B. In Fig. 1 B

a cylinder 107 symbolizes the panoramic view captured by one of the 360° cameras 104B shown in Fig. 1A. From the entirety of the video data represented by the cylinder 107 the operator in the studio room extracts a specific view symbolized by a viewing field 108 shown as dotted section of the cylinder 107. The viewing field 108 corresponds to the viewing field of a virtual camera 109 shown in the centre of the cylinder 107. The viewing field 108 is delimited by its borders 111 A, 111B. For illustrative purposes the borders 111 A, 111B are connected with the centre of the lens of the virtual camera 109 by lines 112A, 112B. In other words: By defining the viewing field 108 the P/T/Z data of the virtual camera are determined. This works also in the other way round, namely by setting P/T/Z data of the virtual camera the viewing field 108 is defined. Obviously the production director can modify the view of the virtual camera 109 because he has access to all data of the panoramic view of the 360° camera. I.e. the operator can create any desired view of the virtual camera simply by processing the data of the camera feed of the 360° camera.

It is also noted that some 360° cameras provide a full-spherical or half-spherical view not only a panoramic view reduced to a cylinder. However, the principle that the production director can extract from the camera stream of the 360° camera a specific view of a virtual camera remains the same.

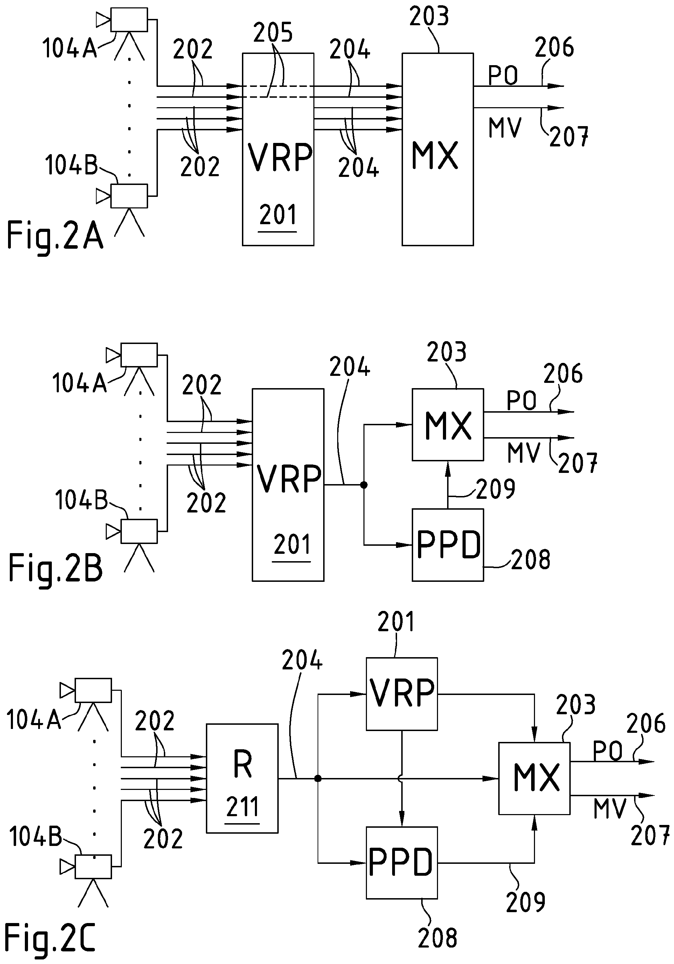

Figs. 2A-2C illustrate examples for the structural and functional interrelationship between the cameras 104A, 104B and video processing equipment in the studio room in the stadium.

In Fig. 2A the cameras 104A, 104B are connected with a video replay device 201 via IP network connections or a combination of SDI (Serial Digital Interface) connections to accommodate the high resolution images of the camera feeds, for example 4K, 6K and 9K images having a horizontal resolution of 4096, 6144, and 9216 pixels, respectively. The high resolution is needed when the production director selects a certain viewing angle for the virtual camera 109 and zooms-in to make a close shot. Even under such circumstances a scene shall be sufficiently detailed. The video replay device 201 is capable of ingesting full 360° images regardless of the chosen medium for the data transfer. The data links between the cameras 104A, 104B and the replay device 201 are shown as arrows 202. The replay device 201 permits recording of all incoming camera feeds making them available for a later replay. At the same time the replay device is also adapted for transferring the incoming camera feeds directly to a mixing device or mixer 203. The data connections between the replay device 201 and the mixer 203 are symbolized by arrows 204. The production director uses the mixer 203 to compose the program output stream and control the production devices in the studio room as in a conventional production studio. The video replay device 201 supports multiple concurrent replay streams together with real time life streams. If it is necessary to avoid the latencies and delays in the system, it is possible to loop-through the life streams from an ingest module in the replay device 201 to the mixer 203. This loop-through capability is symbolized by dashed lines 205. The mixer 203 generates the program-out signal or stream 206 for being broadcasted in the life production set up. The mixer 203 also generates a multi-view signal 207 enabling the display of a multitude of camera feeds and/or replay signals for training purposes. Thus, the equipment in the studio room enables a program director to compose a program output stream 206 from the available camera and replay feeds.

Fig. 2B exhibits an alternative set up of the cameras and the associated processing equipment. The setup shown in Fig. 2B distinguishes itself over the one shown in Fig. 2A by the presence of an additional post production device 208, such as an editor, a graphics generator and the like. The output of the postproduction device 208 is transmitted to the mixer 203 via a data link 209.

Fig. 2C is a further exemplary setup which is provided with a router 211 ingesting camera feeds and routing them with full flexibility to the replay device 201, the mixing 203 and the postproduction device 208. The production director can use the enhanced flexibility for complex productions.

It is noted that in one embodiment of the present disclosure the video processing devices 201, 203, 208 and 211 are implemented by one or multiple production server(s) which is/are adapted by software to perform the dedicated functionalities.

The video replay device 201 is adapted to provide multiple concurrent replay streams together with real time life streams. For instance, the production director may compose a program stream showing the discussion of experts in a studio simultaneously with a replay video stream of the situation just discussed by the experts in a side-by-side split-screen configuration. For this kind of production signal a replay stream of the situation in the game and a live camera feed from the studio with the experts are required.

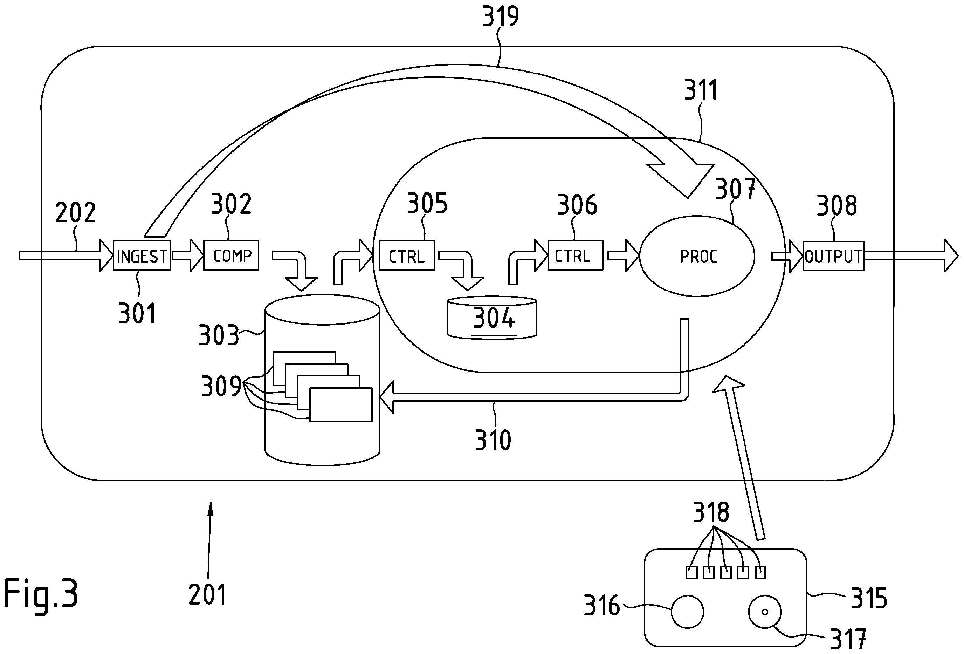

Fig. 3 shows a schematic block diagram of a replay device 201 with more details with regard to its main components and signal flows. The camera feeds are received via a data connection 202 by an ingest module 301. For the sake of simplicity only a single ingest module 301 is shown in Fig. 3 but it is to be understood that in other embodiments multiple ingest modules 301 can be present depending on the amount of data that has to be ingested. The images from the cameras 104A, 104B arrive in sequential order and are compressed in a compression unit 302 for storing the images of all camera feeds as an array of individually addressable images being labelled with an origin identifier and a sequence number and/or a time stamp. The origin identifier permits to identify the camera that has recorded the corresponding image. The images are stored in a reliable mass storage device 303, e.g. a RAID hard drive. Since the mass storage device 303 does not necessarily provide a sufficiently low latency access for a life production, an additional low latency cache memory 304 is provided. The cache memory 304 stores images and makes them accessible with low latency for a play-out. This concept allows working with slower storage modules in the mass storage device 303. The relatively higher latency of the mass storage device can be caused either by a relatively long delay for accessing the storage modules itself or by a connection delay in embodiments in which the mass storage device 303 is remote from the rest of the replay device 201.

A cache controller 305 intelligently fills the cache memory 304 based on images already stored in the cache memory 304, commands received from an operator, prefetch heuristics and delivery speed of the reliable mass storage device 303. Globally speaking the cache controller 305 runs an algorithm aiming at determining which images are likely to be used in a replay stream and are not available with low latency from the mass storage device 303. These images are then made available in the cache memory 304. The process of storing images in the mass storage device 303 and the cache memory 304 is performed asynchronously from the ingest process such that an already stored video feed can be replayed while ingesting the incoming camera feeds is ongoing.

A play-out controller 306 ensures a fluid flow of play-out images at a desired frame rate by continuously fetching the images from the cache memory at a frequency defined by the desired frame rate. In most cases the cache controller 305 succeeds to make the required images available for the play-out controller 306. Therefore, the play-out controller 306 always assumes that the requested images are stored in the cache memory 304. Whenever this is not the case, the play-out controller 306 informs the cache controller 305 to fetch the requested images from the mass storage device 303. Until the requested images become available in the cache memory 304 the play-out controller 306 plays-out the most suitable alternative image, which is an image being available in the cache memory 304 and having a time stamp which is closest to the timestamp of the requested image. I.e. it has a time stamp before or after the time stamp of the requested image as a function of the play-out direction being either forward or backward.

A play-out processor 307 receives instructions from an operator and performs processing of the image data prior to the final play-out including decompression of the images and implementing received instructions. The output signal stream of the play-out processor 307 is transferred to an output module 308.

As it has been mentioned above, the video replay device 201 not only stores all camera feeds but also multiple replay streams. The replay streams are stored in the mass storage device 303 and the stored replay streams are symbolized by file icons 309. The replay streams to be stored are communicated by a direct data link 310 between the play-out processor 307 and the mass storage device 303.

The cache memory 304, the cache controller 305, the play-out controller 306 and the play-out processor 307 form together a replay controller 311.

The operator can enter instructions to the replay device 201 by means of a control panel 315. The control panel 315 is equipped with a jog dial 316 that permits an operator to browse in forward and backward direction of a recorded video stream selected by the operator. In one embodiment the operator selects the video stream by means of the multi-view display which receives the multi-view signal MV 207 such that several recorded video streams are displayable. By means of a joystick 317 the operator defines P/T/Z data for the virtual camera 109. Furthermore, the control panel 315 is provided with a plurality of action buttons 318 to define the start of the clip, the start of the clip, to fetch clip, to store data, play-out one or several of the stored replay streams with a simple command. The control panel 315 is communicatively connected with the replay controller 311 enabling data communication between the devices.

The video replay device 201 allows for multiple replay streams together with real-time streams such as camera feeds. The real-time streams follow the same communication path as the recording scene case the latency of the intermediary storage is acceptable. If not, a shortcut or loop-through connection 319 is foreseen in the video replay device 201, which directly connects the ingest module 301 with the play-out processor 207 to perform data processing on the real-time streams. For instance, if the real-time stream is a 360° camera feed then the play-out processor 207 performs data processing to generate a video stream corresponding to the camera feed of a virtual camera according to given P/T/Z data.

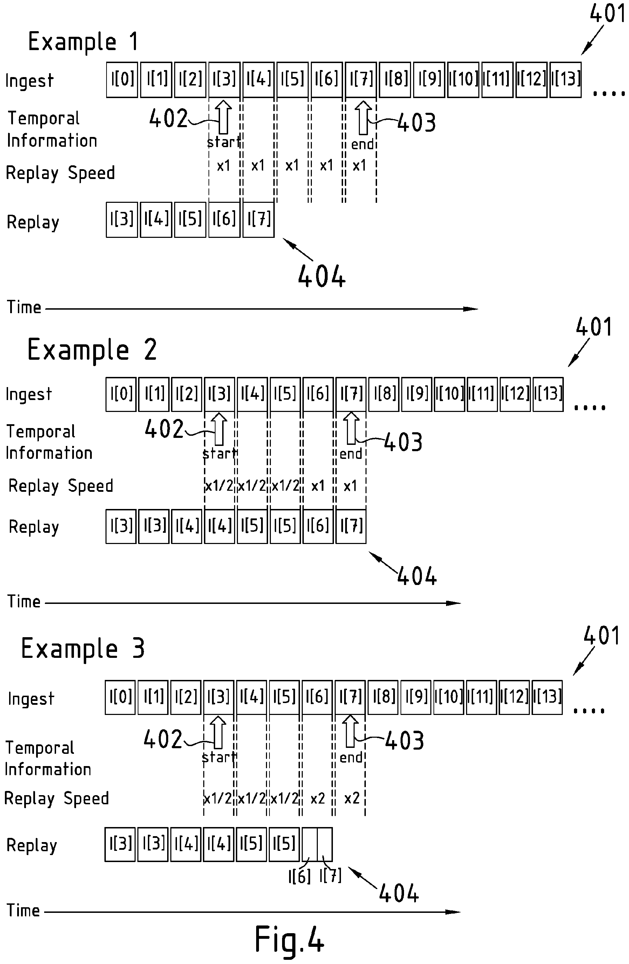

The described functionalities put the director in a position to prepare interesting replays and store them for later use, for example when a summary of the event is broadcasted. To do so the images of a replay stream are stored jointly with temporal information indicating the start time of the replay stream, i.e. its first image, and the end time of the replay stream, i.e. its last image. In addition to that replay speed is stored for each image defining the speed at which the images between the start time and the end time are to be played out. Fig. 4 shows three examples illustrating the described concept.

In Fig. 4 a sequence of images of a video input stream 401 is labelled as "Ingest". The temporal information in terms of start time and end time is indicated by arrows 402 and 403, respectively. The temporal information defines the beginning and the end of a replay stream 404, which in the case of example 1, begins with image I[3] and ends with image I[7]. In addition, each image in the replay stream is associated with a replay speed. Of course this is only a schematic example and in reality a replay stream normally contains many more images. Nevertheless, the global concept is shown correctly.

Specifically, a replay speed "x1" corresponds to normal speed, while a replay speed <1 corresponds to slow motion and a replay speed >1 corresponds to fast forward. More specifically, at a replay speed of x½, each recorded image or frame is repeated corresponding to the replay speed which is only half of the recording speed. In the opposite sense, at a replay speed of x2, each recorded image or frame is displayed only for half of the time duration compared to the time duration during which the respective image was captured by a camera. Thus the replay speed x2 is twice as high as the normal speed. In example 1, the replay speed is set to x1 for all replayed images and, hence, the replay stream is played out at the same speed as the video input stream is ingested.

In example 2 the start and end times are set like in example 1 but the replay speed for images I[3] to I[5] is set to x½, while the replay speed for images I[6] and I[7] is set to x1. Consequently, in the replay stream the images I[3] to I[5] are repeated but images I[6] and I[7] are shown only once. In a more sophisticated embodiment images are not simply repeated in case of slow-motion but rather a temporal interpolation between images of the ingest stream is performed. Specifically, instead of repeating image I[3], an interpolated image between images I[3] and I[4] is calculated and inserted in the replay stream between images I[3] and I[4] etc. In this way a "smoother" impression of the replay stream is achieved.

Example 3 in Fig. 4 corresponds to example 2 except that the replay speed for images I[6] and I[7] is set to x2. Consequently, in the replay stream the images I[3] to I[5] are repeated twice (or interpolated images are inserted) but images I[6] and I[7] are shown only for half of the duration compared to normal speed.

A display (not shown in the drawings) informs the production director or operator about the replay stream itself, i.e. the start and end time of the replay stream and the replay speed. Changes with regard to the replay stream are entered by means of the control panel 315.

As mentioned above all replay streams can be stored for later use. In order to make sure that proper output processing is applied to each image in the replay stream, the corresponding P/T/Z data of an associated virtual camera are stored as well. In an alternative embodiment the operator can indicate a series of discrete P/T/Z data points throughout the replay stream. In that case rather than having discrete jumps from one discrete P/T/Z data point to the next, individual P/T/Z data points are interpolated for each of the images contained in the replay stream. This technique is also referred to as "spatial interpolation" and provides for a smooth impression for a viewer of the replay stream.

Finally, it is noted that the operator can intervene at any point and make suitable adjustments on the fly during play-out simply by sending a corresponding command from the control panel 315 to the replay controller 311. In particular, the production director can change the P/T/Z data for a stored 360° camera stream during replay. Hence, during the replay of the 360° camera stream, the view of the virtual camera changes. For example, the P/T/Z data are continuously controlled by an operator. In another example the operator only defines a set of multiple P/T/Z data. In this case in yet another embodiment an algorithm performs an interpolation between the set of multiple P/T/Z data to generate continuously changing P/T/Z data. If the P/T/Z data change continuously there will be a gradual change of the virtual camera view.

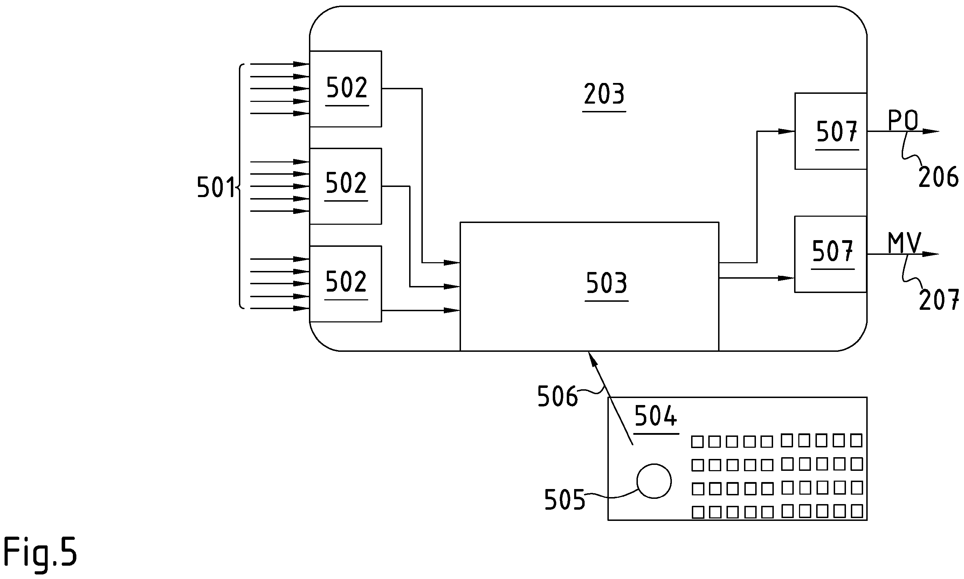

Fig. 5 shows a schematic block diagram of mixer 203. The mixer 203 receives a plurality of video input streams 501 including one or more 360° camera feeds. The video input streams 501 are received by network cards, SDI acquisition boards or any other acquisition board capable of ingesting 360° camera feeds. We will generally refer in the following to ingest modules 502 that receive that video input streams 501. In one embodiment the 360° camera feeds are sent as a sequence of full 360° images over IP links. In another embodiment the 360° camera feeds are split over a plurality of SDI links. In the latter case the 360° images are recomposed from the several SDI streams upon ingest in the video mixer 203 before further processing can be applied on the full 360° images. It is further noted, that any data format, protocol or link capable of carrying the 360° videos streams can be utilized as well. From the ingest modules 502 the video streams are transferred to a processor 503 containing at least one graphical processing unit for implementing video mixing effects and extracting a virtual camera feed from one of the 360° camera feeds. A control panel 504 receives instructions and commands from an operator controlling the mixer 203 including commands with regard to mixing effects to be applied on the video streams and with regard to extracting a virtual camera feed from one of the 360° camera feeds. For that purpose the control panel 504 is provided with a joystick 505 by means of which the operator can enter the P/T/Z data of a virtual camera he or she desires. A data communication link 506 communicatively connects the control panel 504 with the mixer 203.

The process video stream(s) are transferred to two output modules 507 interfacing with an IP network or SDI links. The output signal stream is formatted for instance according to the ST 2022, ST 2110 or similar standard in case of an IP network. The output streams represent the program output stream 206 and/or the multi-view stream 207, for instance.

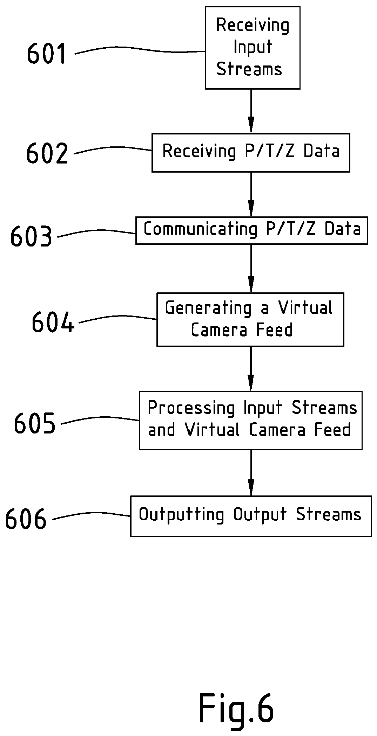

Fig. 6 shows a schematic flow diagram illustrating a method for processing video streams according to the present disclosure. The method comprises receiving 601 a plurality of video input streams, wherein at least one of the plurality of video input streams is a camera feed of a 360° camera. Then, commands with regard to P/T/Z data of a virtual camera are received 602 and communicated 603 to a processor. The at least one camera feed of a 360° camera is processed to generate 604 a virtual camera feed as defined by the P/T/Z data. Next, the video input streams and the virtual camera feed are processed 605 to generate one or several video output streams. Finally, the output streams are outputted 606.

The functionalities offered by a replay device according to the present disclosure are not only valuable for a broadcast production during a game it can also be used for training purposes of individual players or teams. The replay device can be used on a training bench to analyse team formations and show players how they can immediately correct or improve in-game performance. Having the ability to stop, rewind, zoom in and slow down video feeds from the in-stadium broadcast cameras to isolate key moments and immediately improve performance can be invaluable.

The real-time streams follow the same path as the recordings in case the latency of this path is acceptable. If the latency is not acceptable, a shortcut is foreseen in the system directly connecting the ingest module with the replay processing module for selection of the virtual camera viewpoint.

**Reference Signs List**

| | | | |
|---|---|---|---|
| 101 | football field | 315 | control panel |
| 102 | stadium | 316 | jog dial |
| 103 | ranks | 317 | joystick |
| 104A,B | camera | 318 | action buttons |
| 105 | goal | 319 | loop through connection |
| 107 | cylinder | 401 | video input stream |
| 108 | viewing field | 402 | start time |
| 109 | virtual camera | 403 | end time |
| 111A,111B | borders of viewing field | 404 | replay stream |
| 112A,112B | lines | 501 | video input streams |
| 201 | video replay device | 502 | ingest modules |
| 202 | arrows | 503 | processor |
| 203 | mixing device, mixer | 504 | control panel |
| 204 | arrows | 505 | joystick |
| 205 | loop through | 506 | data link |
| 206 | program output signal | 507 | output module |
| 207 | multi-view signal | 601-605 | method steps |
| 208 | postproduction device | | |
| 209 | data link | | |
| 211 | router | | |
| 301 | ingest module | | |
| 302 | compression unit | | |
| 303 | mass storage | | |
| 304 | cache memory | | |
| 305 | cache controller | | |
| 306 | play-out controller | | |
| 307 | play-out processor | | |
| 308 | output module | | |
| 309 | stored replay stream | | |
| 310 | direct data link | | |
| 311 | replay controller | | |

## Claims

1. Video processing apparatus comprising
- an input module (301, 502) for receiving a plurality of video input streams, wherein at least one video input stream is a camera feed of a 360° camera,
- a control panel (315, 504) for receiving commands with regard to P/T/Z data of a virtual camera;
- a processor (307, 503) for processing the video input streams to generate one or several video output streams (206, 207); wherein the control panel (315, 504) communicates the P/T/Z data to the processor which processes the at least one 360° camera feed to generate a virtual camera feed as defined by the P/T/Z data, wherein the virtual camera feed is one of the one or several of video output streams; and
- an output module (308, 507) for outputting the one or several video output streams.

2. Video processing apparatus according to claim 1 further comprising a compression unit (302) and a storage device (303) for recording the plurality of video input streams, wherein the storage device (303) records all images of the video input streams for later replay.

3. Video processing apparatus according to claim 1 further comprising a replay controller (311) for controlling a replay stream, wherein the replay controller is composed of a cache controller (305), a cache memory (304), the play-out controller (306) and the output processor (307).

4. Video processing apparatus according to claim 3 wherein the replay controller (311) is adapted for providing image interpolation capabilities between images succeeding each other in time or spatial dimensions.

5. Video processing apparatus according to claim 3 wherein the control panel (315, 504) is adapted for receiving further commands and for communicating the first commands to the replay controller(311), wherein the further commands include start and stop time (402, 403) of a recorded video stream (401) to be replayed and an associated replay speed.

6. Video processing apparatus according to claim 5 wherein the control panel (315) comprises a jog dial (316) enabling browsing forward and backward in any recorded video stream

7. Video processing apparatus according to claim 1 wherein the control panel is provided with a joystick (317, 505) allowing an operator to input P/T/Z data for the virtual camera (109).

8. Video processing apparatus according to claim 2 wherein the output is communicatively connected with the storage device (303) for enabling recording of the video output streams.

9. Video processing apparatus according to claim 1 wherein the processor (503) comprises a graphical processing unit for performing mixing effects on the video input streams.

10. Method for processing video streams comprising:
- receiving (601) a plurality of video input streams, wherein at least one of the plurality of video input streams is a camera feed of a 360° camera;
- receiving (602) commands with regard to P/T/Z data of a virtual camera;
- communicating (603) the P/T/Z data of the virtual camera to a processor;
- processing (604) the at least one camera feed of a 360° camera to generate a virtual camera feed as defined by the P/T/Z data;
- processing (605) video input streams and the virtual camera feed to generate one or several video output streams; and
- outputting (606) the one or several video output streams.

11. Method according to claim 10 further comprising recording at least one of the plurality of video input streams for later replay as a replay stream.

12. Method according to claim 10 further comprising dynamically adapting the P/T/Z data as the virtual camera feed evolves.

13. Method according to claim 11 further comprising storing jointly with the images of the replay stream a start time (402), and end time (403) and a replay speed.

14. Method according to claim 11 or 12 further comprising storing the P/T/Z data of the virtual camera (109) associated with the replay stream.

15. Method according to claim 12 further comprising performing a temporal interpolation between images of the replay stream if the replay speed corresponds to the slow-motion play-back.

16. Method according to claim 14 further comprising performing spatial interpolation between images of the replay stream if multiple virtual camera views are associated with the replay stream.
